# EUROPEAN PATENT APPLICATION

(11) **EP 1 840 423 A1**
(43) Date of publication of application: **03.10.2007**
(21) Application number: 05783555.5
(22) Date of filing: 14.09.2005
(51) Int. Cl.: F16J 15/12

(54) **GASKET**

(30) Priority: 21.01.2005 JP 2005013865
(71) Applicant: NOK Corporation, Minato-ku Tokyo 105-8585 (JP)
(72) Inventor: YANAGI, Tokunori NOK CORPORATION, Haibara-gun, Shizuoka 4210532 (JP)
(74) Representative: TBK-Patent
(86) International application number: PCT/JP2005/016893
(87) International publication number: WO 2006/077677

(57) **Abstract**

In a gasket installed to an inner peripheral surface of an opening portion in a housing such as a cylinder head cover or the like for sealing between the housing and an insertion member such as a plug tube or the like inserted to the opening portion, an object of the invention is to provide a gasket which can be free from a tear generated in an outer peripheral mounting portion at a time of pressure-inserting the gasket to a housing or can be securely pressure-inserted to the housing, even if high precision is not secured in an inner diameter of an opening portion in a housing such as a cylinder head cover or the like, thereby providing an excellent installation property. In order to achieve the object, an outer diameter of the outer peripheral mounting portion is set to a dimension equal to or less than an inner diameter of the opening portion, and an outer peripheral portion of the outer peripheral mounting portion is provided with a fastening margin setting means for setting a fastening margin with respect to the inner peripheral surface of the opening portion, and a diametrical direction positioning means for positioning in a diametrical direction with respect to the inner peripheral surface of the opening portion. The fastening margin setting means is tilted in an axial opposite direction to a pressure-inserting direction of the gasket to the housing and is formed in a lip shape in which an outer diameter in a free state is set larger than the inner diameter of the opening portion.

## Description

### Technical Field

The present invention relates to a gasket corresponding to one kind of a sealing apparatus. The gasket in accordance with the present invention is employed in a motor vehicle associated field or a field of a general industrial machinery or the like. For example, in the motor vehicle associated field, the gasket is employed for sealing between a cylinder head cover and a plug tube or between the cylinder head cover and an injection pipe or the like in an internal combustion engine.

### Background Art

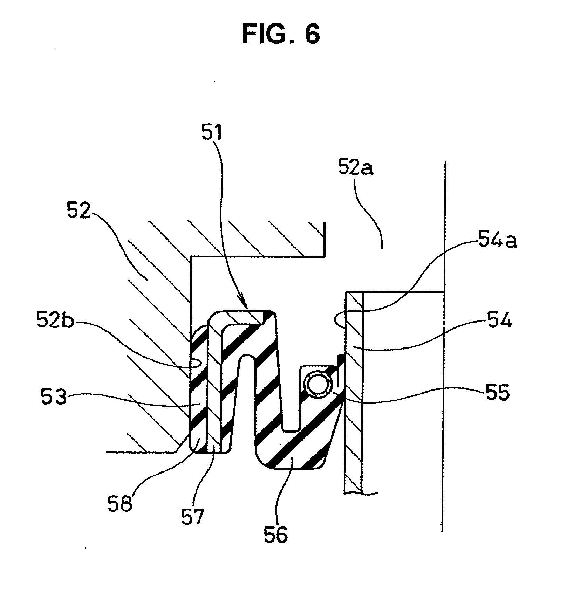

For example, there has been conventionally known a plug tube gasket 51 shown in Fig. 6 for sealing between a cylinder head cover and a plug tube in an internal combustion engine. The gasket 51 is provided with a structure integrally having an outer peripheral mounting portion 53 pressure-inserted to an inner peripheral surface 52b of an opening portion 52a in a cylinder head cover 52 corresponding to a housing, a seal lip portion 55 brought into close contact with an outer peripheral surface 54a of a plug tube 54 corresponding to an insertion member inserted to the opening portion 52a, and an eccentricity following portion 56 provided between the outer peripheral mounting portion 53 and the seal lip portion 55 (refer to Japanese Unexamined Utility Model Publication No. 63-171648, patent document 1 or Japanese Unexamined Utility Model Publication No. 62-195643, patent document 2).

However, in this prior art, since the structure is made such that the outer peripheral mounting portion 53 is constituted by a metal ring 57 and a squeeze-shaped outer peripheral rubber portion 58 attached to an outer peripheral surface of the metal ring 57, and the outer peripheral mounting portion 53 is fixed to the inner peripheral surface 52b of the opening portion 52a in the head cover 52 on the basis of a fastening margin (a collapsing margin) set in the latter outer peripheral rubber portion 58, the following disadvantages are generated.

Considering a case of attaching the gasket 51 having the structure mentioned above to the head cover 52 made of a resin, a high precision is required in a dimension of the opening portion 52a in the resin head cover 52 (a dimension about an inner diameter, a complete roundness, a cylindricality or the like of the opening portion 52a). This is based on the following reasons. A minimum fastening margin with respect to the head cover 52 is set to the outer peripheral rubber portion 58 of the outer peripheral mounting portion 53 for securing a sealing performance between the gasket 51 and the head cover 52, however, if high precision is not secured about the inner diameter of the opening portion 52a in the head cover 52, a maximum fastening margin of the outer peripheral rubber portion 58 with respect to the head cover 52 becomes too large, whereby there is a case that a tear is generated in the outer peripheral rubber portion 58 at a time of pressure-inserting the gasket 51 to the head cover 52, or it is impossible to pressure-insert the gasket 51 to the head cover 52. Further, even if the gasket 51 can be forcedly pressure-inserted, a permanent strain is generated and the head cover 52 is expanded due to the head cover 52 being made of the resin, so that there is generated a problem that a sealing performance is deteriorated and the gasket tends to fall away. In order to prevent these matters, the high precision is required in the inner diameter of the opening portion 52a, as mentioned above. In accordance with the knowledge of the inventors of the present invention, it is necessary to set an inner diameter tolerance of the opening portion 52a to be ± 0.1 mm or less in an actual dimension.

However, in some kinds of the resin material, there is a case that it is hard to secure high precision about the inner diameter of the opening portion 52a mentioned above or a significant cost increase is involved, whereby it is required to absorb a dimensional error generated in the housing side by the gasket side.

Further, as the other prior art with respect to the present invention, a seal apparatus (a seal apparatus of an ignition plug tube insertion portion in a cylinder head cover) having a lip-shaped first seal portion is described in Japanese Unexamined Patent Publication No. 2002-332914, patent document 3, however, the lip-shaped first seal portion is provided for making the seal portion follow to an eccentricity of the ignition plug tube, and the structure and the operation and effect are different from the structure in which the fastening margin setting portion is provided for fixing the gasket in the diametrical direction in accordance with the present invention.

Further, Japanese Unexamined Patent Publication No. 2002-98231, patent document 4, describes an elastic gasket having an annular lip for securing a compression margin and a seal performance in an outer peripheral side of a tubular mounting base portion corresponding to an outer peripheral mounting portion in the present invention. However, in accordance with the prior art, since the annular lip is structured as a squeeze-shaped lip having a chevron cross sectional shape and is compression-deformed in a diametrical direction at a time of being pressure-inserted, the annular lip is hard to be elastically deformed in the diametrical direction, whereby there is a disadvantage that the annular lip is hard to be pressure-inserted to the opening portion of the housing and an installation property is not good.

### Disclosure of the Invention

### Problem to be Solved by the Invention

The present invention is made by taking the points mentioned above into consideration, and an object of the present invention is to provide a gasket which can prevent a tear from being generated in an outer peripheral mounting portion at a time of pressure-inserting the gasket to a housing even if high precision is not secured in an inner diameter of an opening portion in a housing such as a cylinder head cover or the like, or can be securely pressure-inserted to the housing, thereby providing an excellent installation property.

### Means for Solving the Problem

In order to achieve the object mentioned above, in accordance with a first aspect of the present invention, there is provided a gasket installed to an inner peripheral surface of an opening portion in a housing for sealing between the housing and an insertion member inserted to the opening portion, comprising:
an outer peripheral mounting portion pressure-inserted to the opening portion;
a seal lip portion brought into close contact with the insertion member; and
an eccentricity following portion provided between the outer peripheral mounting portion and the seal lip portion,
wherein the outer peripheral mounting portion, the seal lip portion and the eccentricity following portion are integrally provided,
wherein the outer peripheral mounting portion has an outer diameter which is set to a dimension equal to or less than an inner diameter of the opening portion, and is provided with a fastening margin setting means for setting a fastening margin with respect to the inner peripheral surface of the opening portion, and a diametrical direction positioning means for positioning in a diametrical direction with respect to the inner peripheral surface of the opening portion, in an outer peripheral portion, and
wherein the fastening margin setting means is tilted in an axial opposite direction to a pressure-inserting direction of the gasket to the housing and is formed in a lip shape in which an outer diameter in a free state is set larger than the inner diameter of the opening portion.

Further, in accordance with a second aspect of the present invention, there is provided a gasket as recited in the first aspect, wherein the diametrical direction positioning means is formed in a projection shape protruding toward an outer side in the diametrical direction from an outer peripheral surface of the outer peripheral mounting portion, and is brought into close contact with the inner peripheral surface of the opening portion of the housing at a time of being pressure-inserted.

Further, in accordance with a third aspect of the present invention, there is provided a gasket as recited in the first aspect, wherein the diametrical direction positioning means is formed in a taper shape in which a diameter is enlarged gradually from a front end side in the pressure-inserting direction toward a rear end side, and is brought into close contact with the taper-shaped diametrical direction positioning portion previously provided in the inner peripheral surface of the opening portion of the housing correspondingly, at a time of being pressure-inserted.

Further, in accordance with a fourth aspect of the present invention, there is provided a gasket as recited in the first aspect, wherein a space portion for facilitating an elastic deformation of the lip-shaped fastening margin setting means is provided in an inner peripheral side of the lip-shaped fastening margin setting means.

Further, in accordance with a fifth aspect of the present invention, there is provided a gasket as recited in the first aspect, wherein a dust seal for preventing a dust from intruding is provided in an outer side of the seal lip portion.

Further, in accordance with a sixth aspect of the present invention, there is provided a gasket as recited in the first aspect, wherein the eccentricity following portion is formed in a bellows shape.

Further, in accordance with a seventh aspect of the present invention, there is provided a gasket as recited in the first aspect, wherein the housing is made of a resin material, and a dimensional error generated at a forming time of the housing is absorbed by an elastic deformation of the fastening margin setting means.

Further, in accordance with an eighth aspect of the present invention, there is provided a gasket as recited in any one of the first to seventh aspects, wherein the housing is constituted by a cylinder head cover, and the insertion member is constituted by a plug tube or an injection pipe inserted to an opening portion of the cylinder head cover.

### Effect of the Invention

The present invention obtains the following effects.

In the gasket in accordance with each of the aspects of the present invention provided with the structures mentioned above, the fitting operation to the housing is executed by the lip-shaped fastening margin setting means formed in the outer peripheral surface of the outer peripheral mounting portion so as to be tilted to one side in the axial direction, in place of the squeeze-shaped outer peripheral rubber portion in the outer peripheral mounting portion or the squeeze-shaped lip (the lip having the chevron cross sectional shape) in the conventional structure, and the lip-shaped fastening margin setting means can be elastically deformed at a time of being pressure-inserted so as to absorb the dimensional error of the inner diameter of the opening portion. Accordingly, even if the dimensional error increasing the fastening margin exists in the inner diameter of the opening portion in the housing such as the cylinder head cover or the like, it is possible to comparatively easily absorb the dimensional error on the basis of the elastic deformation of the lip-shaped fastening margin setting means in such a manner as to collapse to one side in the axial direction. Accordingly, it is possible to previously prevent the problem that the tear is generated in the outer peripheral mounting portion at a time of pressure-inserting the gasket to the housing or the gasket can not be pressure-inserted to the housing, and it is possible to firmly fix the gasket to the housing under such state.

Further, since the lip-shaped fastening margin setting means is formed in such a manner as to be tilted to the opposite side in the axial direction to the pressure-inserting direction of the gasket to the housing, the lip-shaped fastening margin setting means is easily elastically deformed at a time of being pressure-inserted, whereby the gasket is easily pressure-inserted to the housing. Further, since the lip-shaped fastening margin setting means which is once pressure-inserted operates like as a wedge, the gasket is hard to be fallen off from the housing, and it is possible to compensate the problem that the gasket is easily fallen off from the housing due to the reduction of the fitting force caused by the reduction of the fitting portion in comparison with the conventional structure.

Further, in accordance with the present invention, it is possible to solve the disadvantage generated in the case of forcibly pressure-inserting the gasket to the housing. Specifically, it is possible to previously prevent generation of a permanent strain in the housing which may cause deterioration of sealing performance, and falling off of the gasket.

Further, in accordance with the structure in which the outer peripheral mounting portion is brought into pressure-contact with the inner peripheral surface of the opening of the housing only by the lip-shaped fastening margin setting means formed in the outer peripheral portion, there is a risk that the outer peripheral mounting portion is fixed to the opening portion in the eccentric state. However, in accordance with the present invention, since the diametrical direction positioning means is provided together with the lip-shaped fastening margin setting means, it is possible to precisely fix the outer peripheral mounting portion to the opening portion of the housing on the basis of the diametrical direction positioning operation by the diametrical direction positioning means. In the case that the diametrical direction positioning means is formed in the projection shape protruding toward the outer side in the diametrical direction from the outer peripheral surface of the outer peripheral mounting portion as described in the second aspect, the projection executes the diametrical direction positioning operation by being brought into close contact with the inner peripheral surface of the opening portion of the housing at a time of being pressure-inserted. Further, in the case that the diametrical direction positioning means is formed in the taper shape in which the diametrical dimension is enlarged gradually from the front end side in the pressure-inserting direction toward the rear end side, as described in the third aspect, the taper executes the diametrical direction positioning operation by being brought into close contact with the taper-shaped diametrical direction positioning portion which is previously provided in the inner peripheral surface of the opening portion of the housing correspondingly. Accordingly, in both cases, it is possible to precisely fix the outer peripheral mounting portion to the opening portion in the diametrical direction.

Further, in the structure in accordance with the fourth aspect of the present invention, since the space portion for facilitating the elastic deformation of the lip-shaped fastening margin setting means is provided in the inner peripheral side of the lip-shaped fastening margin setting means, the lip-shaped fastening margin setting means is structured such as to be further easily elastically deformed in the diametrical direction. Accordingly, it is possible to further improve the effect of absorbing the dimensional error and the effect of easily pressure-inserting in the structure in accordance with the first aspect.

Further, in the structure in accordance with the fifth aspect of the present invention, since the dust seal for preventing the dust from intruding is additionally provided in the outer side of the seal lip portion, it is possible to effectively seal the external foreign material such as the dust or the like on the basis of the dust seal. Accordingly, it is possible to further improve the seal effect in the structure in accordance with the first aspect.

Further, in the structure in accordance with the sixth aspect of the present invention, since the eccentricity following portion is formed in the bellows shape, it is possible to effectively follow to the displacement of the insertion member on the basis of the bellows-shaped eccentricity following portion. Accordingly, a gap is hard to be generated between the insertion member and the seal lip portion. Accordingly, from this point of view, it is possible to further improve the seal effect in the structure in accordance with the first aspect.

Further, in the structure in accordance with the seventh aspect of the present invention, since the housing is made of the resin material and is structured such as to absorb the dimensional error generated at a time of forming on the basis of the elastic deformation of the fastening margin setting means, it is possible to effectively absorb the dimensional error generated in the housing made of the resin material. Since the comparatively great dimensional error tends to be generated in the housing made of the resin material as mentioned above, it is possible to effectively employed the effect of absorbing the dimensional error in accordance with the present invention.

Further, in the structure in accordance with the eighth aspect of the present invention, the operations and effects on the basis of each of the aspects mentioned above can be obtained as the plug tube gasket constituted by the combination of the cylinder head cover corresponding to the housing and the plug tube corresponding to the insertion member, and as the injection pipe gasket constituted by the combination of the cylinder head cover corresponding to the housing and the injection pipe corresponding to the insertion member.

### Brief Description of the Drawings

Fig. 1 is a half cut cross sectional view of a gasket in accordance with a first aspect of the present invention;
Fig. 2 is a half cut cross sectional view of a gasket in accordance with a second aspect of the present invention;
Fig. 3 is a half cut cross sectional view of a gasket in accordance with a third aspect of the present invention;
Fig. 4 is a half cut cross sectional view of a gasket in accordance with a fourth aspect of the present invention;
Fig. 5 is a half cut cross sectional view of a gasket in accordance with a fifth aspect of the present invention; and
Fig. 6 is a half cut cross sectional view of a gasket in accordance with a prior art.

### Description of Reference Numerals

- 1: plug tube gasket (gasket)
- 2: cylinder head cover (housing)
- 2a: opening portion
- 2b: inner peripheral surface
- 2c: step portion
- 2d: diametrical direction positioning portion
- 2e: axial direction positioning portion
- 3: plug tube (insertion member)
- 3a: outer peripheral surface
- 4: gasket main body
- 5: outer peripheral mounting portion
- 6: seal lip portion
- 7: eccentricity following portion
- 7a: membrane portion
- 7b: reverse portion
- 8, 23: metal ring
- 8a: tubular portion
- 8b: flange portion
- 9: outer peripheral rubber portion
- 10: inner peripheral rubber portion
- 11: fastening margin setting means
- 12: axial direction positioning means
- 13: diametrical direction positioning means
- 13a: pressure-insertion guiding means
- 14: garter spring
- 15: baffle plate (come-off preventing member)
- 21: dust seal
- 22: mounting portion
- 24: dust lip

### Best Mode for Carrying Out the Invention

Next, a description will be given of embodiments in accordance with the present invention with reference to the accompanying drawings.

### First embodiment

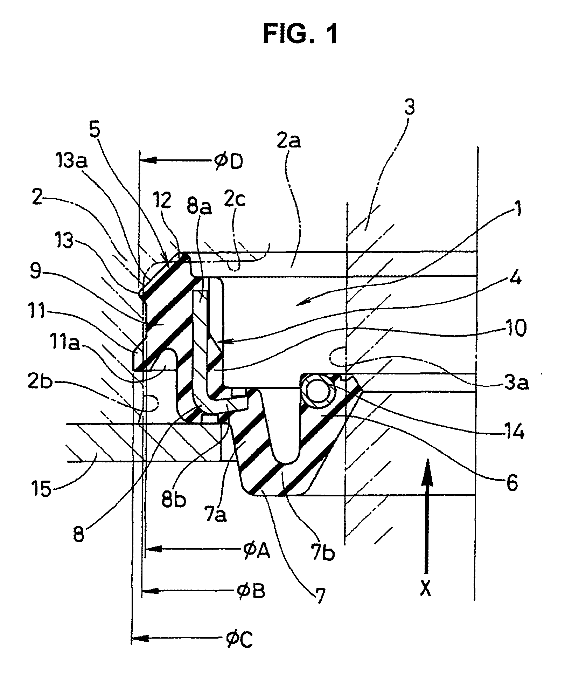

Fig. 1 shows a half cross section of a gasket 1 in accordance with a first embodiment of the present invention.

The gasket 1 in accordance with the embodiment is installed to an inner peripheral surface 2b of an opening portion 2a of a resin cylinder head cover 2 so as to seal between the head cover 2 and a plug tube 3 in an internal combustion engine, is brought into close contact with an outer peripheral surface 3a of the plug tube 3 inserted to the opening portion 2a, and is structured as follows. In this case, the gasket 1 is structured such as to be pressure-inserted to the opening portion 2a of the head cover 2 from an inner side (a lower side in the drawing) of the head cover 2 (in a direction of an arrow X).

In other words, the gasket (the plug tube gasket) 1 integrally has an annular outer peripheral mounting portion 5 fitted to an inner peripheral side of a cylindrical inner peripheral surface 2b of the opening portion 2a in the head cover 2, an annular seal lip portion 6 brought into close contact with the cylindrical outer peripheral surface 3a of the plug tube 3, and an annular eccentricity following portion 7 provided between the outer peripheral mounting portion 5 and the seal lip portion 6, and a gasket main body 4 is formed by the outer peripheral mounting portion 5, the seal lip portion 6 and the eccentricity following portion 7.

The outer peripheral mounting portion 5 integrally has a metal ring 8 having an L-shaped cross section and having a flange portion 8b integrally formed in one end in an axial direction (a rear end in a pressure-inserting direction) of a tubular portion 8a toward a diagonally inner side in a diametrical direction, an outer peripheral rubber portion 9 attached to an outer peripheral surface of the metal ring 8 and made of a rubber elastic material, and an inner peripheral rubber portion 10 attached to an inner peripheral surface of the metal ring 8 and made of the same rubber elastic material, and a lip-shaped annular fastening margin setting means 11 is integrally formed in an outer peripheral surface of the outer peripheral rubber portion 9 in such a manner as to be tilted in an axial opposite direction to the pressure-inserting direction (the direction X on the drawing).

The outer peripheral rubber portion 9, the outer peripheral mounting portion 5 or the gasket main body 4 is formed such that an outer diameter φ A is equal to or smaller than an inner diameter φ B of the inner peripheral surface 2b of the opening portion 2a in the head cover 2 (φ A ≦ φ B), whereby in the outer peripheral rubber portion 9, the outer peripheral mounting portion 5 or the gasket main body 4, the fastening margin with respect to the inner peripheral surface 2b of the opening portion 2a in the head cover 2 is set to zero. On the contrary, the lip-shaped fastening margin setting means 11 is formed such that an outer diameter φ C thereof in a free state is larger than the inner diameter φ B of the inner peripheral surface 2b of the opening portion 2a in the head cover 2 (φ C > φ B), and the fastening margin with respect to the head cover 2 is set to a larger value than zero, thereby elastically deforming in such a manner as to collapse to an inner side in a diametrical direction at a time of pressure-inserting so as to absorb the dimensional error of the inner diameter of the inner peripheral surface 2b of the opening portion 2a in the head cover 2. In order to facilitate the elastic deformation of the lip-shaped fastening margin setting means 11, an annular space portion 11a is provided in an inner peripheral side of the lip-shaped fastening margin setting means 11.

Further, an end portion (an upper end portion in the drawing) in the front side in a pressure-inserting direction of the outer peripheral rubber portion 9 or the outer peripheral mounting portion 5 is provided with an annular axial direction positioning means 12 formed in a projection shape for positioning the gasket 1 in an axial direction by being brought into contact with an annular step portion (which may be called as an end wall portion or an axial direction positioning means) 2c previously provided in the head cover 2 at a time of pressure-inserting, and a front side in the pressure-inserting direction of the lip-shaped fastening margin setting means 11 in the outer peripheral surface of the outer peripheral rubber portion 9 or the outer peripheral mounting portion 5 is provided with an annular diametrical direction positioning means 13 formed in a projection shape for positioning the gasket 1 in the diametrical direction by being brought into close contact with the inner peripheral surface 2a of the head cover 2 so as to eliminate inclination of the gasket 1. The projection-shaped diametrical direction positioning means 13 is formed such that an outer diameter φ D in a free state is equal to or larger than the inner diameter φ B of the head cover 2 (φ D ≧ φ B, formed 0 to about 1.0 mm larger), and is smaller than the outer diameter φ C of the lip-shaped fastening margin setting means 11 (φ D < φ C), on the basis of an operation to do. Further, a front side in the pressure-inserting direction of the projection-shaped diametrical direction positioning means 13 is provided with an annular pressure-insertion guiding means 13a formed in a taper shape for facilitating the pressure-insertion by guiding at a time of pressure-inserting.

The eccentricity following portion 7 integrally has an annular membrane portion 7a integrally formed toward an opposite direction (a downward direction in the drawing) to the pressure-inserting direction from the inner peripheral rubber portion 10 in the outer peripheral mounting portion 5, and an annular reverse portion 7b integrally formed in a leading end of the annular membrane portion 7a and having a U-shaped cross section, and the seal lip portion 6 is integrally formed in a leading end of the revere portion 7b toward the pressure-inserting direction (an upward direction in the drawing). The seal lip portion 6 is provided with a garter spring 14 for regulating the fastening margin with respect to the plug tube 3.

Further, an annular step portion 2c is provided in the inner peripheral surface 2b of the opening portion 2a in the head cover 2 toward an inner side (a lower side in the drawing) of the head cover 2 as mentioned above, and is structured such that the gasket 1 is positioned in an axial direction by being brought into contact with the step portion 2c at a time of pressure-inserting. In other words, the gasket 1 is inserted to the opening portion 2a of the head cover 2 from the inner side of the head cover 2. The outer peripheral rubber portion 9 or the outer peripheral mounting portion 5 of the gasket 1 is brought into contact with the step portion 2c in the projection-shaped axial direction positioning means 12 at a time of inserting, whereby the gasket 1 is positioned in the axial direction with respect to the head cover 2. Further, the inserted gasket 1 is prevented from falling off in the axial direction by a falling-off preventing member such as a baffle plate 15 or the like which is later attached to the inner side of the head cover 2, and is prevented from falling off with respect to the head cover 2. As a method of fixing the falling-off preventing member such as the baffle plate 15 or the like to the head cover 2, there can be considered a fixing method using a bolt, a fixing method in accordance with welding, or the like.

In the gasket 1 having the structure mentioned above, while the projection-shaped axial direction positioning means 11, the diametrical direction positioning means 13 and the lip-shaped fastening margin setting means 11 execute the seal operation with respect to the head cover 2, the seal lip portion 6 executes the seal operation with respect to the plug tube 3, and the eccentricity following portion 7 executes the following operation with respect to the eccentricity of the plug tube 3, the structure is particularly made such that the lip-shaped fastening margin setting means 11 executes the fitting operation with respect to the head cover 2 together with the seal operation, and the lip-shaped fastening margin setting means 11 is elastically deformed at a time of pressure-inserting so as to absorb the dimensional error of the inner diameter φ B of the opening portion 2a. Therefore, the lip-shaped fastening margin setting means 11 collapses and is elastically deformed so as to reduce the diameter, thereby absorbing the dimensional error, even if the dimensional error increasing the fastening margin exists in the inner diameter φ B of the opening portion 2a in the resin head cover 2. Accordingly, it is possible to previously prevent the disadvantage that the tear is generated in the outer peripheral rubber portion 9 at a time of pressure-inserting the gasket 1 to the opening portion 2a of the head cover 2 or the gasket 1 can not be pressure-inserted to the opening portion 2a of the head cover 2, from being generated, and it is possible to firmly fix the gasket 1 to the head cover 2 under such state.

Further, since the lip-shaped fastening margin setting means 11 is formed so as to be tilted in the opposite direction to the pressure-inserting direction (the direction of the arrow X) of the gasket 1 to the opening portion 2a of the head cover 2, it is possible to easily pressure-insert the gasket 1 to the opening portion 2a of the head cover 2. Further, since the lip-shaped fastening margin setting means 11 which is once pressure-inserted operates like as a wedge, the gasket 1 is hard to be fallen off from the head cover 2, and it is possible to compensate the problem that the gasket is easily fallen off from the head cover 2 due to the reduction of the fitting force caused by the reduction of the fitting portion in comparison with the conventional structure. In accordance with the study by the inventors of the present invention, it is possible to cope with the dimensional error of ± 0.2 mm of the inner diameter φ B of the opening portion 2a in the resin head cover 2.

In this case, the gasket 1 in accordance with the first embodiment mentioned above may be provided with the following structures.

### Second and Third embodiments

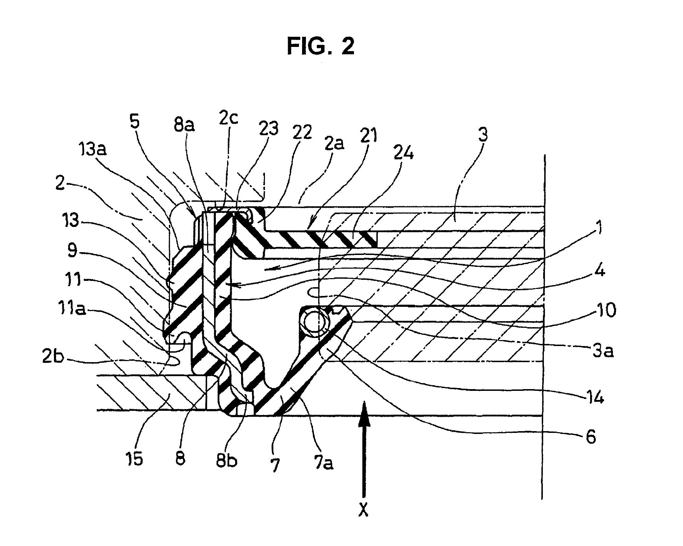

As in Fig. 2 shown as a second embodiment, the structure is made such that a dust seal 21 is provided in an outer side (an upper side in the drawing) of the seal lip portion 6 in the gasket main body 4, thereby improving a sealing performance against the dust. The dust seal 21 is formed in an annular shape by a predetermined rubber-shaped elastic body, and integrally has a mounting portion 22 with a metal ring 23 fitted to the inner peripheral side (the upper end portion in the drawing) of the end portion in the pressure-inserting direction of the gasket main body 4, and a dust lip 24 brought into close contact with the plug tube 3.

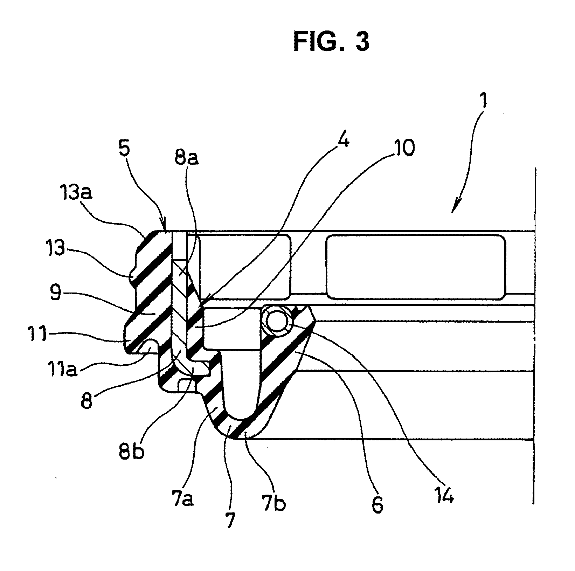

Further, in the first embodiment (Fig. 1) mentioned above, the metal ring 8 buried in the gasket main body 4 is structured such that the flange portion 8b is integrally formed in one end in the axial direction of the tubular portion 8a toward the diagonally inner side in the diametrical direction, however, the cross sectional shape of the flange portion 8b may be formed in a shape which is narrowed down in two stages as illustrated. Further, as in Fig. 3 shown as a third embodiment, the flange portion 8b may be formed in a shape which is completely directed to an inner side in the diametrical direction.

### Fourth embodiment

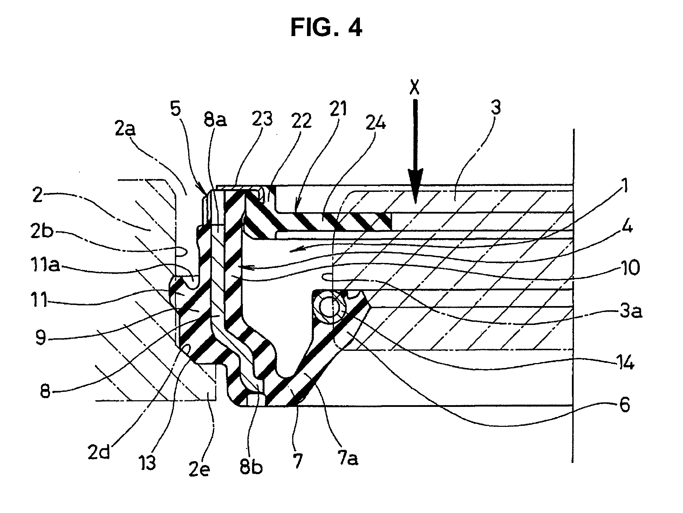

In the first to third embodiments (Figs. 1 to 3), the gasket 1 is structured such as to be pressure-inserted to the opening portion 2a of the head cover 2 from the inner side (the lower side in the drawing) of the head cover 2. However, it may be structured such as to be pressure-inserted to the opening portion 2a of the head cover 2 from an outer side (an upper side in the drawing) instead of the inner side of the head cover 2. In this case, as shown in Fig. 4, the lip-shaped fastening margin setting means 11 is provided toward an upper direction in the drawing which corresponds to an opposite direction to the pressure-inserting direction (the direction of the arrow X). Further, the diametrical direction positioning means 13 is provided in a lower side in the drawing of the lip-shaped fastening margin setting means 11, and the diametrical direction positioning means 13 is not formed in the projection shape, but is formed in a taper shape and is brought into close contact with the taper-shaped diametrical direction positioning portion 2d which is previously provided in the inner peripheral surface 2b of the opening portion in the head cover 2 correspondingly. The taper has a shape in which the diameter is enlarged gradually from the front end side in the pressure-inserting direction toward the rear end side. Further, the axial direction positioning portion 2e is formed as in an inward flange shape in the inner peripheral surface 2b of the opening portion in the head cover 2, and the taper-shaped diametrical direction positioning portion 2d is provided in a peripheral edge portion thereof.

### Fifth embodiment

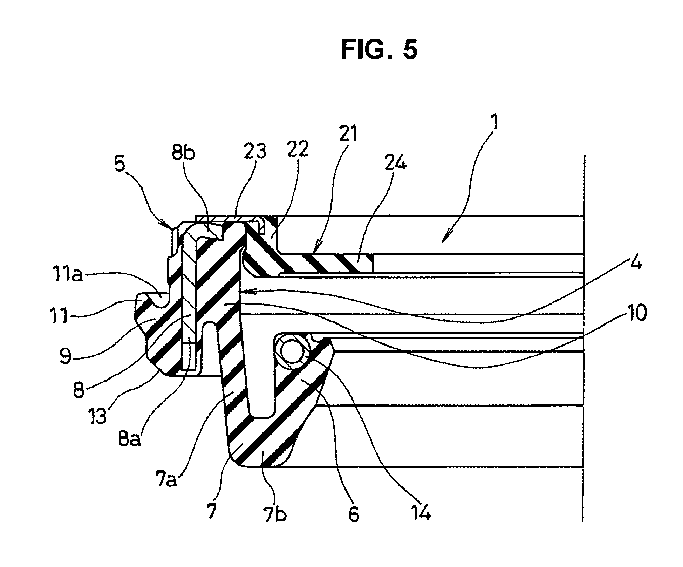

Further, as shown in Fig. 5, the metal ring 8 may be structured such that the flange portion 8b is provided in the rear end portion in the pressure-inserting direction of the tubular portion 8a.

## Claims

1. A gasket (1) installed to an inner peripheral surface (2b) of an opening portion (2a) in a housing (2) for sealing between said housing (2) and an insertion member (3) inserted to said opening portion (2a), comprising:
an outer peripheral mounting portion (5) installed to the inner peripheral surface (2b) of said opening portion (2a);
a seal lip portion (6) brought into close contact with said insertion member (3); and
an eccentricity following portion (7) provided between said outer peripheral mounting portion (5) and the seal lip portion (6),
wherein the outer peripheral mounting portion (5), the seal lip portion (6) and the eccentricity following portion (7) are integrally provided,
wherein said outer peripheral mounting portion (5) has an outer diameter (φ A) which is set to a dimension equal to or less than an inner diameter (φ B) of said opening portion (2a), and is provided with a fastening margin setting means (11) for setting a fastening margin with respect to the inner peripheral surface (2b) of said opening portion (2a), and a diametrical direction positioning means (13) for positioning in a diametrical direction with respect to the inner peripheral surface (2b) of said opening portion (2a), in an outer peripheral portion, and
wherein said fastening margin setting means (11) is tilted in an axial opposite direction to a pressure-inserting direction of said gasket (1) to said housing (2) and is formed in a lip shape in which an outer diameter (φ C) in a free state is set larger than the inner diameter (φ B) of said opening portion (2a).

2. A gasket as claimed in claim 1, wherein the diametrical direction positioning means (13) is formed in a projection shape protruding toward an outer side in the diametrical direction from an outer peripheral surface of the outer peripheral mounting portion (5), and is brought into close contact with the inner peripheral surface (2b) of the opening portion (2a) of the housing (2) at a time of being pressure-inserted.

3. A gasket as claimed in claim 1, wherein the diametrical direction positioning means (13) is formed in a taper shape in which a diameter is enlarged gradually from a front end side in the pressure-inserting direction toward a rear end side, and is brought into close contact with the taper-shaped diametrical direction positioning portion (2d) previously provided in the inner peripheral surface (2b) of the opening portion (2a) of the housing (2) correspondingly, at a time of being pressure-inserted.

4. A gasket as claimed in claim 1, wherein a space portion (11a) for facilitating an elastic deformation of the lip-shaped fastening margin setting means (11) is provided in an inner peripheral side of the lip-shaped fastening margin setting means (11).

5. A gasket as claimed in claim 1, wherein a dust seal (21) for preventing a dust from intruding is provided in an outer side of the seal lip portion (6).

6. A gasket as claimed in claim 1, wherein the eccentricity following portion (7) is formed in a bellows shape.

7. A gasket as claimed in claim 1, wherein the housing (2) is made of a resin material, and a dimensional error generated at a forming time of the housing is absorbed by an elastic deformation of the fastening margin setting means (11).

8. A gasket as claimed in any one of claims 1 to 7, wherein the housing is constituted by a cylinder head cover (2), and the insertion member is constituted by a plug tube (3) or an injection pipe inserted to an opening portion (2a) of said cylinder head cover (2).
